# EUROPEAN PATENT SPECIFICATION

(11) **EP 1 063 396 B1**
(45) Date of publication and mention of the grant of the patent: **06.10.2004**
(21) Application number: 00305225.5
(22) Date of filing: 20.06.2000
(51) Int. Cl.: B01J 35/04, F01N 3/28, B01D 53/92

(54) **Ceramic honeycomb structure, ceramic honeycomb catalyst carrier, and ceramic honeycomb catalytic converter using the same**
Keramische Wabenstruktur, keramischer Wabenkatalysatorträger, und aus diesen bestehenden keramischen Wabenkatalysator
Structure céramique en nid d'abeilles, support de catalyseur en nid d'abeilles et catalyseur céramique en nid d'abeilles utilisant ceux-ci

(30) Priority: 22.06.1999 JP 17506999
(43) Date of publication of application: 27.12.2000
(73) Proprietor: NGK INSULATORS, LTD., Nagoya-City, Aichi Prefecture 467-8530 (JP)
(72) Inventor: Hijikata, Toshihiko, NGK Insulators, Ltd., Nagoya-city, Aichi-Pref. 467-8530 (JP)
(74) Representative: Paget, Hugh Charles Edward

(56) References cited:
- EP-A- 0 283 224
- EP-A- 0 449 556
- EP-A- 0 554 104
- EP-A- 0 798 042
- EP-A- 0 807 466
- EP-A- 0 867 222
- EP-A- 0 965 735

## Description

### BACKGROUND OF THE INVENTION

### 1. Field of the Invention

The present invention relates to a catalytic converter which is a device for purifying harmful combustion gasses exhausted from internal combustion engines and the like, and more particularly relates to a ceramic honeycomb structure, a ceramic honeycomb catalyst carrier, and a ceramic honeycomb catalytic converter using these.

### 2. Description of Related Art

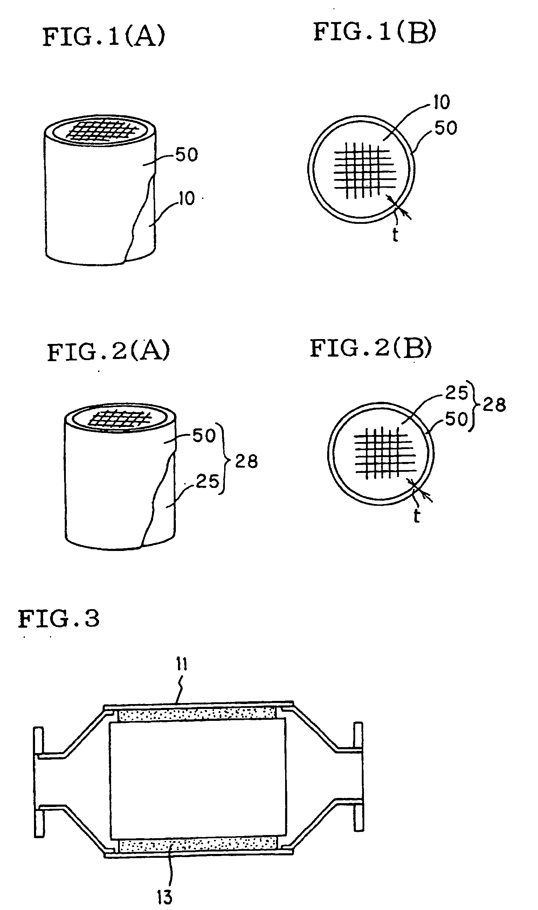

Currently, ceramic honeycomb catalytic converters are widely used as automobile exhaust gas purifying devices (See Fig. 3). Environmental issues in recent years along with even stricter exhaust gas restrictions are requiring that catalysts be able to function immediately following starting the engine when the exhaust gas is still cool, i.e., cold starts.

Accordingly, a step being taken is to reduce the thickness of the partitions of the catalyst carrier (ceramic honeycomb catalyst carrier) to 1/2 to 1/6 of the conventional thickness, so as to lower the thermal capacity of the catalyst carrier and speed up the temperature rising of the catalyst carrier, along with preventing deterioration of engine performance due to pressure loss.

However, with the above catalyst carrier, the thermal expansion difference between the inner side of the outer wall which carries the catalyst, and the outer side of the outer wall which does not carry the catalyst becomes great, so cracks easily occur at the perimeter of the catalyst carrier due to the hot exhaust gases in actual use, and further, in the event that thermal and mechanical usage conditions are severe, the cracks at the perimeter of the catalyst carrier have been known to progress to the interior of the catalyst carrier, resulting in damage to the catalyst carrier or loss of catalyst functions.

EP 0554104 discloses strengthening of a honeycomb structure by applying an external coating which fills grooves on the surface of the honeycomb structure formed by the walls of the outermost cells of the honeycomb.

EP 0449556 also discloses the strengthening of a honeycomb structure by applying an external coating to reinforce the honeycomb structure.

EP 0283224 discloses the coating of a honeycomb body with a coating layer in order to ensure that the overall structure is cylindrical in shape.

EP 0789042 provides a catalyst structure in which cracks are inhibited by ensuring that the mean thermal expansion coefficient of the overall structure falls within a certain range of values.

### SUMMARY OF THE INVENTION

The present invention has been made in light of the above-described current state, and accordingly, it is an object thereof to provide a ceramic honeycomb structure, a ceramic honeycomb catalyst carrier, and a ceramic honeycomb catalytic converter using these, capable of preventing damage to the ceramic honeycomb catalyst carrier in a sure manner by means of preventing cracks at the perimeter of the ceramic honeycomb catalyst carrier.

According to a first aspect of the present invention, there is provided a ceramic honeycomb catalyst structure as set out in claim 1.

Here, the material which has a thermal expansion co-efficient approximately the same as that of the catalyst is preferably waterproof. Also, the partition thickness of the ceramic honeycomb structure is preferably 0.12 mm or thinner.

Further, according to another aspect of the present invention, there is provided a ceramic honeycomb catalyst converter comprising the ceramic honeycomb catalyst structure of the invention fixed within a metal case by means of a holding material.

Now, the holding material here is preferably a non-intumescent ceramic fiber mat.

### BRIEF DESCRIPTION OF THE DRAWINGS

Fig. 1A is a schematic perspective view of an example of the ceramic honeycomb structure according to the present invention;
Fig. 1B is a frontal view of that shown in Fig. 1A;
Fig. 2A is a schematic perspective view of an example of the ceramic honeycomb catalyst carrier according to the present invention;
Fig. 2B is a frontal view of that shown in Fig. 1A;
Fig. 3 is a schematic explanatory diagram of an example of a ceramic honeycomb catalytic converter;
Fig. 4A is a drawing illustrating the results of crack observation of a ceramic honeycomb catalyst carrier according to the first through fourth embodiments of the present invention following endurance testing;
Fig. 4B illustrates the results of the same with a first comparative example thereof; and
Fig. 4C illustrates the results of the same with a second comparative example.

### DETAILED DESCRIPTION OF THE PREFERRED EMBODIMENTS

The ceramic honeycomb structure according to the present invention is formed by adhering a material 50 which has a thermal expansion co-efficient approximately the same as that of a catalyst to the entire outer side of the outer wall of a ceramic honeycomb structure 10 before carrying the catalyst, as shown in Figs. 1A and 1B.

Also, the ceramic honeycomb catalyst carrier according to the present invention is formed by adhering a material 50 which has a thermal expansion co-efficient approximately the same as that of the catalyst to the entire outer side of the outer wall of a ceramic honeycomb catalyst carrier 25, as shown in Figs. 2A and 2B.

The adhered thickness t of the material 50 which has a thermal expansion co-efficient approximately the same as that of the catalyst may be approximately the same thickness as the catalyst carried on partitions within the ceramic honeycomb catalyst carrier, but more preferably is determined such that the thermal expansion co-efficient be approximately the same for the outer side and inner side of the outer wall of the ceramic honeycomb catalyst carrier.

Specifically, in the case of causing a ceramic honeycomb structure manufactured of cordierite (partition wall thickness of 0.06 mm, and 140 cells/cm²) to carry a Pd catalyst (amount of precious metal, 5300 g/m³ (150 g/ft³), and wash coat amount, 200 g/liter), the adhering is preferably made to the entire outer side of the ceramic honeycomb structure at a thickness of 10 to 50 µm.

From the above, the thermal expansion difference between the outer side and inner side of the outer wall of the ceramic honeycomb catalyst carrier can be solved, by using the ceramic honeycomb structure or the ceramic honeycomb catalyst carrier according to the present invention.

Thus, cracks occurring at the perimeter of the ceramic honeycomb catalyst carrier in actual use can be prevented, so damage to the ceramic honeycomb catalyst carrier can be prevented in a sure manner.

Also, in the event that the ceramic honeycomb structure according to the present invention is to be used as a canning structure (a structure wherein the ceramic honeycomb structure before holding the catalyst is fixed by a holding material compressed within the metal case beforehand), the material which has a thermal expansion co-efficient approximately the same as that of the catalyst is preferably waterproof.

This is to enable inhibiting clogging of the outermost cells of the ceramic honeycomb structure with the catalyst by the holding material absorbing water via the partitions at the perimeter of the ceramic honeycomb structure in the catalyst carrying process.

As for the material which has a thermal expansion co-efficient approximately the same as that of the catalyst used with the present invention, there is used one of γ-Al₂O₃ and α-Al₂O₃ as the principal constituent thereof, which have thermal expansion coefficients equal to or close to γ-Al₂O₃ which is the principal constituent of the wash coat (used for forming an activated alumina layer film on the interior of the ceramic honeycomb structure).

Also, waterproofing the material which has a thermal expansion co-efficient approximately the same as that of the catalyst can be realized by adding an appropriate amount of water-soluble acrylic resin, polyethylene resin, etc.

The present invention is more effective the thinner the partition thickness of the ceramic honeycomb structure is, and is preferably applied to such of 0.12 mm or thinner. This is because the thinner the partition thickness is, the easier cracks occur at the perimeter of the ceramic honeycomb structure.

Next, the ceramic honeycomb catalytic converter according to the present invention is formed by fixing the above ceramic honeycomb structure within a metal case by means of a holding material, and subsequently causing this to carry a catalyst.

Also, the ceramic honeycomb catalytic converter according to the present invention is formed by fixing the above ceramic honeycomb catalyst carrier within a metal case by means of a holding material.

Now, with the ceramic honeycomb catalytic converter according to the present invention, the holding material used is preferably a non-intumescent ceramic fiber mat. This is because the holding pressure only 1/3 to 1/10 as compared to conventional expanding holding material, and cracks easily occur at the perimeter of the ceramic honeycomb structure.

Now, the present invention will be described in further detail with reference to embodiments, by the present invention is by no means restricted to these embodiments.

### First Embodiment and Second Embodiment

Ceramic honeycomb structures manufactured of cordierite, with a diameter of 106 mm, length of 114 mm, partition wall thickness of 0.06 mm, 140 cells/cm², and a thermal expansion co-efficient of 0.6 × 10⁻⁶/°C, were prepared for each.

An activated alumina layer film was formed on the interior of the ceramic honeycomb structures with a wash coat amount of 200 g/liter, following which a Pd catalyst (amount of precious metal, 5300 g/m³ (150 g/ft³)) was carried thereby.

Next, the entire outer side of the outer walls of the ceramic honeycomb structures were respectively coated with materials having the substance shown in Table 1 as the primary constituent thereof, to the thickness shown in Table 1, thereby forming ceramic honeycomb catalyst carriers according to the present invention.

### Third Embodiment

A ceramic honeycomb structure manufactured of cordierite, with a diameter of 106 mm, length of 114 mm, partition wall thickness of 0.06 mm, 140 cells/cm², and a thermal expansion co-efficient of 0.6 × 10⁻⁶/°C, was subjected to coating on the entire outer side of the outer wall with the material having the substance shown in Table 1 as the primary constituent thereof, to the thickness shown in Table 1, thereby forming a ceramic honeycomb structure according to the present invention.

Next, the ceramic honeycomb structure was fixed within the metal case by a holding material (non-intumescent ceramic fiber mat), thus forming a canning structure, and an activated alumina layer film was formed on the interior of the above canning structure with a wash coat amount of 200 g/liter, following which a Pd catalyst (precious metal amount, 5300g/m³ (150 g/ft³)) was carried, thereby manufacturing a ceramic honeycomb catalytic converter .

**Table 1**

| | Material with thermal expansion coefficient approximately the same as that of catalyst | | Average thickness of application (µm) |
|---|---|---|---|
| | Primary constituent | Thermal expansion coefficient (10⁻⁶/°C) | |
| First Embodiment | γ-Al₂O₃ | 7.1 | 25 |
| Second Embodiment | α-Al₂O₃ | 8.0 | 20 |
| Third Embodiment | γ-Al₂O₃ + water-soluble acrylic resin | 7.1 | 25 |
| * Catalyst (Pd-Al₂O₃): 7.3 × 10⁻⁶/°C | | | |

### First Comparative Example

A ceramic honeycomb structure manufactured of cordierite, with a diameter of 106 mm, length of 114 mm, partition wall thickness of 0.17 mm, 62 cells/cm², and a thermal expansion co-efficient of 0.6 × 10⁻⁶/°C, was prepared.

An activated alumina layer film was formed on the interior of the ceramic honeycomb structures with a wash coat amount of 200 g/liter, following which a Pd catalyst (amount of precious metal, 5300g/m³ (150 g/ft³)) was carried thereby, thus manufacturing a ceramic honeycomb catalyst carrier .

### Second Comparative Example

A ceramic honeycomb structure manufactured of cordierite, with a diameter of 106 mm, length of 114 mm, partition wall thickness of 0.06 mm, 140 cells/cm², and a thermal expansion co-efficient of 0.6 × 10⁻⁶/°C, was prepared.

An activated alumina layer film was formed on the interior of the ceramic honeycomb structures with a wash coat amount of 200 g/liter, following which a Pd catalyst (amount of precious metal, 5300g/m³ (150 g/ft³)) was carried thereby, thus manufacturing a ceramic honeycomb catalyst carrier.

The ceramic honeycomb catalyst carriers (First and Second Embodiments, and First and Second Comparative Examples) thus manufactured were fixed within metal cases by a holding material (non-intumescent ceramic fiber mat), thus forming a ceramic honeycomb catalytic converter.

Endurance testing was performed for each of the obtained catalytic converters (First through Third Embodiments, and First and Second Comparative Examples), using a engine dynamo meter. The endurance testing was performed for a total of 500 cycles wherein one cycle consists of 15 minutes heating (maximum temperature 900°C) and 15 minutes cooling (minimum temperature 120°C).

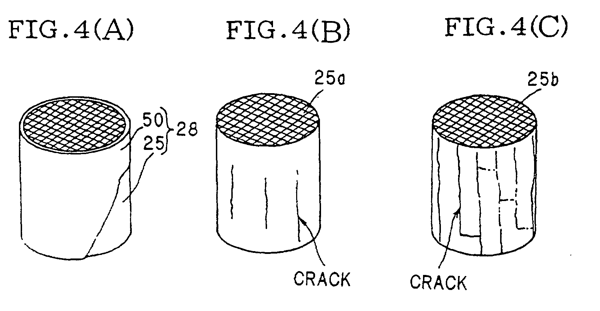

Following the endurance testing, the ceramic honeycomb catalyst carriers were removed from the metal cases, and cracks in the ceramic honeycomb catalyst carriers were observed using a stereoscope. The results thereof are shown in Fig. 4.

### (Examination of First through Third Embodiments, and First and Second Comparative Examples)

From the results shown in Fig. 4, regarding the First through Third Embodiments, no cracks whatsoever occurring at the perimeter of the ceramic honeycomb catalyst carrier 28 at the time of actual use could be found, due to application of the material 50 which has a thermal expansion co-efficient approximately the same as that of the catalyst to the entire outer side of the outer wall of the ceramic honeycomb catalyst carrier 25.

On the other hand, with the First Comparative Example, three cracks were observed at the perimeter of the ceramic honeycomb catalyst carrier 25a, though small. This is because the thermal expansion difference between the inner side of the perimeter which carries the catalyst and the outer side of the perimeter which does not carry the catalyst becomes great.

Further, with the Second Comparative Example which is a thin wall type, many web-like cracks were observed at the perimeter of the ceramic honeycomb catalyst carrier 25b. Moreover, it was found that part of the cracks had advanced around 20 mm into the interior of the ceramic honeycomb catalyst carrier 25b.

Thus, the ceramic honeycomb structure, ceramic honeycomb catalyst carrier, and ceramic honeycomb catalytic converter using these according to the present invention is capable of preventing cracks at the perimeter of the ceramic honeycomb catalyst carrier in actual use, and thus is capable of preventing damage to the ceramic honeycomb catalyst carrier in a sure manner.

## Claims

1. A ceramic honeycomb catalyst structure comprising a ceramic honeycomb body (10) having interior partition walls carrying a catalyst and an outer wall, wherein said catalyst is an activated alumina catalyst and said honeycomb body (10) is made from cordierite, with a coating material (50) adhered to the entire outer side of the outer wall, **characterized in that** said coating material (50) has a primary constituent selected from Al₂O₃ and α-Al₂O₃ and optionally contains water-soluble acrylic resin or polyethylene resin as a waterproofing agent, the coating material (50) having approximately the same thermal expansion coefficient as the catalyst.

2. A ceramic honeycomb catalyst structure according to claim 1, wherein the partition wall thickness of said ceramic honeycomb catalyst carrier is 0.12 mm or less.

3. A ceramic honeycomb catalyst structure according to claim 1 or 2, wherein the thickness of said coating material (50) adhered to the entire outer side of the outer wall of the cordierite honeycomb body is between 10 and 50µm.

4. A ceramic honeycomb catalytic converter comprising a ceramic honeycomb catalyst structure according to any one of claims 1 to 3, and a metal case (11) wherein said ceramic honeycomb catalyst structure is fixed within the metal case by means of a holding material (13).

5. A ceramic honeycomb catalytic converter according to claim 4, wherein said holding material is a non-intumescent ceramic fiber mat.

6. A method of making a ceramic honeycomb catalyst structure according to any one of claims 1 to 3 comprising the step of adhering the coating material (50) to the outer wall of the cordierite honeycomb structure body (10) before or after applying the activated alumina catalyst to the interior partition walls of the body (10).

7. A method of making a ceramic honeycomb catalytic converter according to claim 4 or 5, comprising the steps of adhering the coating material (50) to the outer wall of the cordierite honeycomb structure body (10), inserting the cordierite honeycomb body (10) having said coating material (50) thereon into the metal case (11) and fixing it therein by means of the holding material (13), and thereafter applying the activated alumina catalyst to the interior partition walls of the body (10).

## Patentansprüche

1. Keramische Wabenkatalysatorstruktur, umfassend einen keramischen Wabenkörper (1) mit inneren Trennwänden, die einen Katalysator tragen, und eine Außenwand, worin der Katalysator ein Katalysator aus aktiviertem Aluminiumoxid ist und der Wabenkörper (10) aus Cordierit hergestellt ist, wobei ein Beschichtungsmaterial (50) auf der gesamten Außenseite der Außenwand aufgebracht ist, **dadurch gekennzeichnet, dass** das Beschichtungsmaterial (50) einen Hauptbestandteil aufweist, der aus γ-Al₂O₃ und α-Al₂O₃ ausgewählt ist, und wahlweise ein wasserlösliches Acrylharz oder ein Polyethylenharz als Imprägnierungsmittel enthält, wobei das Beschichtungsmaterial (50) in etwa denselben Wärmeausdehnungskoeffizienten hat wie der Katalysator.

2. Keramische Wabenkatalysatorstruktur nach Anspruch 1, worin die Dicke der Trennwand des keramischen Wabenkatalysatorträgers 0,12 mm oder weniger beträgt.

3. Keramische Wabenkatalysatorstruktur nach Anspruch 1 oder 2, worin die Dicke des Beschichtungsmaterials (50), das auf der gesamten Außenseite der Außenwand des Cordierit-Wabenkörpers aufgebracht ist, zwischen 10 und 50 µm beträgt.

4. Keramischer Wabenabgaskatalysator, umfassend eine keramische Wabenkatalysatorstruktur nach einem der Ansprüche 1 bis 3 und ein Metallgehäuse (11), worin die keramische Wabenkatalysatorstruktur innerhalb des Metallgehäuses mithilfe eines Haltematerials (13) befestigt ist.

5. Keramische Wabenabgaskatalysator nach Anspruch 4, worin das Haltematerial eine nicht-quellende Keramikfasermatte ist.

6. Verfahren zur Herstellung einer keramischen Wabenkatalysatorstruktur nach einem der Ansprüche 1 bis 3, umfassend den Schritt des Aufbringens des Beschichtungsmaterials (50) auf die Außenwand des Cordierit-Wabenstrukturkörpers (10) vor oder nach dem Auftragen des Katalysators aus aktiviertem Aluminiumoxid auf die inneren Trennwände des Körpers (10).

7. Verfahren zur Herstellung eines keramischen Wabenabgaskatalysators nach Anspruch 4 oder 5, umfassend die Schritte des Aufbringens des Beschichtungsmaterials (50) auf die Außenwand des Cordierit-Wabenstrukturkörpers (10), des Einführens des Cordierit-Wabenstrukturkörpers (10) mit dem darauf aufgebrachten Beschichtungsmaterial (50) in das Metallgehäuse (11) und des Befestigens desselben in diesem mithilfe des Haltematerials (13), und nachfolgend des Auftragens des Katalysators aus aktiviertem Aluminiumoxid auf die inneren Trennwände des Körpers (10).

## Revendications

1. Structure de catalyseur céramique en nid d'abeilles comprenant un corps céramique en nid d'abeilles (10) ayant des parois de séparation intérieures supportant un catalyseur et une paroi extérieure, où ledit catalyseur est un catalyseur d'alumine activée, et ledit corps en nid d'abeilles (10) est réalisé en cordiérite, un matériau de revêtement (50) adhérant à tout le côté extérieur de la paroi extérieure, **caractérisée en ce que** ledit matériau de revêtement (50) comporte un constituant primaire sélectionné parmi γ-Al₂O₃ et α-Al₂O₃ et contient en option une résine acrylique soluble dans l'eau ou une résine de polyéthylène comme agent imperméabilisant, le matériau de revêtement (50) ayant approximativement le même coefficient de dilatation thermique que le catalyseur.

2. Structure de catalyseur céramique en nid d'abeilles selon la revendication 1, où l'épaisseur de la paroi de séparation dudit support de catalyseur céramique en nid d'abeilles est de 0,12 mm ou moins.

3. Structure de catalyseur céramique en nid d'abeilles selon la revendication 1 ou 2, où l'épaisseur dudit matériau de revêtement (50) adhérant à tout le côté extérieur de la paroi extérieure du corps en cordiérite en nid d'abeilles est entre 10 et 50 µm.

4. Convertisseur catalytique céramique en nid d'abeilles comprenant une structure de catalyseur céramique en nid d'abeilles selon l'une des revendication 1 à 3, et un boîtier métallique (11), où ladite structure de catalyseur céramique en nid d'abeilles est fixée dans le boîtier métallique au moyen d'un matériau de retenue (13).

5. Convertisseur catalytique céramique en nid d'abeilles selon la revendication 4, où ledit matériau de retenue est un tapis de fibres céramiques non-intumescent.

6. Procédé de fabrication d'une structure de catalyseur céramique en nid d'abeilles selon l'une des revendications 1 à 3, comprenant l'étape consistant à faire adhérer le matériau de revêtement (50) à la paroi externe du corps de structure (10) en cordiérite en nid d'abeilles avant ou apr ès l'application du catalyseur d'alumine activée aux parois de séparation intérieures du corps (10).

7. Procédé de fabrication d'un convertisseur catalytique céramique en nid d'abeilles selon les revendications 4 ou 5, comprenant les étapes consistant à faire adhérer le matériau de revêtement (50) à la paroi externe du corps de structure (10) en cordiérite en nid d'abeilles, à insérer le corps en cordiérite en nid d'abeilles (10) ayant ledit matériau de revêtement (50) sur celui-ci dans le boîtier métallique (11) et le fixer dans celui-ci au moyen du matériau de retenue (13), et appliquer ensuite le catalyseur d'alumine activée aux parois de séparation intérieures du corps (10).
